# EUROPÄISCHE PATENTANMELDUNG

(11) **EP 0 529 133 A1**
(43) Veröffentlichungstag der Anmeldung: **03.03.1993**
(21) Anmeldenummer: 91114576.1
(22) Anmeldetag: 29.08.1991
(51) Int. Cl.: F16F 13/00

(54) **Schwingungsisolator**

(71) Anmelder: MOOG GmbH, D-71034 Böblingen (DE)
(72) Erfinder: Teutsch, Hansklaus, W 7030 Böblingen (DE)
(74) Vertreter: Grünecker, Kinkeldey, Stockmair & Schwanhäusser Anwaltssozietät

(57) **Zusammenfassung**

Die vorliegende Erfindung bezieht sich auf einen verbesserten Schwingungsisolator zur Unterdrückung hochfrequenter mechanischer Schwingungen. Der Schwingungsisolator besteht aus einem Gehäuse mit einer darin vorgesehenen festen Zwischenwand (6), in der ein beweglicher Kolben (14) gelagert ist. Durch Bewegung des Kolbens werden die Volumen der durch die feste Zwischenwand (6) begrenzten oberen (8) und unteren (11) Kammer vergrößert bzw. verkleinert. Die Einrichtung umfaßt wenigstens ein Sensorelement (19,20) zur Erfassung der mechanischen Schwingungen, die ein elektrisches Signal erzeugen nach dessen Maßgabe die Bewegung des Kolbens (14) ausgeführt wird.

## Beschreibung

Die vorliegende Erfindung bezieht sich auf einen Schwingungsisolator nach dem Oberbegriff des Anspruchs 1.

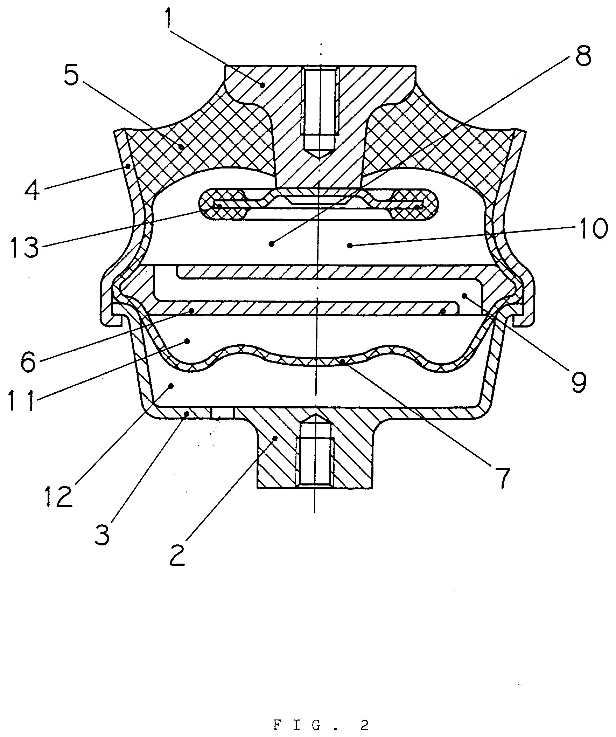

Fig. 2 zeigt einen herkömmlichen Schwingungsisolator zur Unterdrückung der Übertragung von mechanischen Schwingungen von einem Schwingungen erzeugenden Teil auf ein Rahmenteil, das möglichst vibrationsfrei gehalten werden soll. Ein solcher Schwingungsisolator wird z.B. im Automobilbereich zur Isolation von Motorschwingungen eingesetzt. Der Schwingungsisolator wird in diesem Fall auch Motorlager genannt und dient dazu, die Vibrationen des Motors an einem Fahrzeug zu isolieren und eine Übertragung der Schwingungen auf den Rahmen des Fahrzeugs zu unterdrücken. Im folgenden wird anhand der Fig. 2 ein herkömmlicher Schwingungsisolator, der zwischen dem Motor und dem Rahmen eines Fahrzeugs eingebaut ist, beschrieben. Das Motorlager umfaßt ein festes oberes Gehäuseteil 4 und einen damit verbundenen elastischen Gummikörper 5. In dem Gummikörper 5 ist ein erstes Aufnahmeteil 1 gelagert, an dem der Motor befestigbar ist. Das Motorlager weist ein unteres Gehäuseteil 3 mit einem damit verbundenen zweiten Aufnahmeteil 2 auf, an welchem der Rahmen befestigbar ist. Das obere und das untere Gehäuseteil 4,3 bilden ein geschlossenes Gehäuse, in dessen Mitte eine feste Zwischenwand 6 ausgebildet ist, wodurch eine obere Kammer 8 und untere Kammer 11 innerhalb des Gehäuses begrenzt wird. Die feste Zwischenwand 6 weist einen Verbindungskanal 9 auf, über den die beiden Kammern 8,11 miteinander verbunden sind. Die obere Kammer 8 und die untere Kammer 11 sind mit einer Flüssigkeit 10 gefüllt. Zwischen der festen Zwischenwand 6 und dem unteren Gehäuseteil 3 ist eine flexible Zwischenwand 7 vorgesehen, die eine weitere Kammer 12 zwischen sich und dem unteren Gehäuseteil begrenzt. Die Kammer 12 ist über eine Verbindungsöffnung mit dem atmosphärischen Umgebungsluftdruck verbunden. In der oberen Kammer 8 befindet sich an dem ersten Aufnahmeteil 1 ein mechanischer Anschlag 13, um eine langhubige Bewegung des ersten Aufnahmeteils 1 mechanisch zu begrenzen.

Im folgenden wird die Funktion des herkömmlichen Motorlagers beschrieben. Wenn das erste Aufnahmeteil 1 durch eine Schwingung des Motors abwärts bewegt wird, gibt der elastische Gummikörper 5 nach und verkleinert das Volumen der oberen Kammer 8. Dadurch entsteht in der Kammer 8 ein höherer Druck als in der unteren Kammer 11. In Folge dessen strömt aus der oberen Kammer 8 durch den Verbindungskanal 9 Flüssigkeit in die untere Kammer 11 ein. Da die untere Kammer 11 mit einer flexiblen Zwischenwand versehen ist, vergrößert sich ihr Volumen durch den steigenden Druck. Die Anwärtsbewegung des Aufnahmeteils 1 erzeugt demzufolge eine allgemeine Federkraft (elastischer Gummikörper 5) und eine dynamische Dämpferkraft (Strömung der Dämpferflüssigkeit 10 aus der Kammer 8 über die Drosselstelle 9 in die Kammer 11), die über das Aufnahmeteil 2 auf den daran befestigten Rahmen übertragen werden.

Bei einer Aufwärtsbewegung des ersten Aufnahmeteils 1 strömt in analoger Weise die Flüssigkeit aus der Kammer 11 in die Kammer 8 zurück. Durch diese Vorgänge werden Schwingungen mit mittlerer Frequenz wirkungsvoll gedämpft bzw. nur ein kleiner Teil der Motorschwingungen wird auf den Rahmen des Fahrzeugs übertragen. Die Steifigkeit des Motorlagers ist abhängig von der Frequenz der zu dämpfenden Schwingungen. Bei einer sehr niedrigen Frequenz wird die Flüssigkeit quasi widerstandslos aus der Kammer 8 durch den Verbindungskanal 9 in die Kammer 11 gepumpt und die Dämpfung wird größtenteils von dem elastischen Gummikörper 5 erreicht. Mit zunehmender Frequenz der Schwingung erhöht sich die Steifigkeit des Motorlagers, da pro Zeiteinheit eine immer größere Menge Flüssigkeit durch den Verbindungskanal 9 gepumpt werden muß. Demzufolge ist das herkömmliche Motorlager geeignet, Schwingungen niedriger und mittlerer Frequenz befriedigend zu dämpfen, jedoch nicht geeignet die Übertragung von hochfrequenten Vibrationen auf den Rahmen des Fahrzeugs zu unterdrücken.

Es ist daher die Aufgabe der vorliegenden Erfindung, einen Schwingungsisolator anzugeben, der sowohl niederfrequente Schwingungen als auch Vibrationen höherer Frequenz wirkungsvoll dämpft.

Diese Aufgabe wird erfindungsgemäß durch einen Schwingungsisolator mit den kennzeichnenden Merkmalen des Anspruchs 1 gelöst.

Bei dem Schwingungsisolator nach der vorliegenden Erfindung ist ein angetriebener Kolben in der Zwischenwand zwischen den beiden Kammern eingebaut, der durch seine Auf- und Abbewegung das Volumen der oberen und unteren Kammer wechselseitig vergrößert und verkleinert. Die Bewegung des Kolbens geschieht nach Maßgabe eines Steuersignals, das in Abhängigkeit von einem elektrischen Ausgangssignal eines Sensorelements zur Erfassung der mechanischen Schwingungen erzeugt wird. Der Kolben wird so bewegt, daß die durch ihn erzeugte Kraft genau um 180^{o} phasenverschoben zu der vom schwingenden Teil erzeugten Feder- und Dämpferkraft wirkt.

Gemäß einer bevorzugten Ausführungsform besteht der Antrieb aus einem elektromagnetischen Linearmotor, der nach Maßgabe eines elektrischen Steuersignals eine schnelle kurzhubige Aufwärts- und Abwärtsbewegung auf den Kolben überträgt.

In einer bevorzugten Ausführungsform ist der Antrieb mit eine starre Stange, die durch das untere Gehäuseteil, die flexible Zwischenwand und die feste Zwischenwand hindurchgeführt ist, verbunden. Damit werden die Bewegungen des Antriebs direkt auf den Kolben übertragen.

Gemäß einer bevorzugten Ausführungsform weist der Kolben eine flexible Membran auf, welche mit der festen Zwischenwand verbunden ist. Die elastische Membran dient der Führung und Abdichtung des Kolbens.

Gemäß einer bevorzugten Ausführungsform sind in der Zwischenwand Anschläge aus einem elastischen Material für den Kolben ausgebildet. Dadurch wird dem Kolben nur ein genau definierter Bewegungsspielraum gegeben.

In einem bevorzugten Ausführungsbeispiel ist wenigstens ein Sensorelement an der Stelle, an der der Schwingungseinfluß minimiert werden soll, vorgesehen. Das Schwingungen erzeugende Teil weist wenigstens ein weiteres Sensorelement auf, um eine überlagerte dem Rahmenteil und dem schwingenden Teil gemeinsame Schwingung zu erfahren. Die Steuerung des Antriebs erfolgt nach Maßgabe der Ausgangssignale dieser Sensorelemente.

Gemäß eines bevorzugten Ausführungsbeispiels enthält das Sensorelement ein Beschleunigungsmeßelement.

Diese Sensorelemente erfassen die dynamischen Kräfte des schwingenden Teiles und des Rahmenteils qualitativ und quantitativ mit großer Genauigkeit und erzeugen ein elektrisches Ausgangssignal nach dessen Maßgabe der Antrieb gesteuert wird.

Gemäß einer bevorzugten Ausführungsform verarbeitet eine Signalverarbeitungseinheit die elektrischen Ausgangssignale der Sensorelemente um ein Steuersignal für den Antrieb zu erzeugen. Das Steuersignal für den Antrieb kann dabei in Abhängigkeit von mehreren Sensorelementen und anderen Parametern erzeugt werden.

In einem bevorzugten Ausführungsbeispiel ist die weitere Kammer mit dem atmosphärischen Luftdruck verbunden. Dadurch kann sich die untere Kammer mit der darin enthaltenen Flüssigkeit leicht ausdehnen. Die zusätzliche Kammer, die von der flexiblen Zwischenwand begrenzt ist, erzeugt bei einer Volumenverkleinerung einen durch den Durchlaßquerschnitt einer Verbindungsöffnung einstellbaren Gegendruck auf die untere Kammer.

Im folgenden wird die vorliegende Erfindung anhand der begleitenden Zeichnungen näher beschrieben.

Es zeigen darin:
- Fig. 1: einen Schwingungsisolator in einer bevorzugten Ausführungsform der vorliegenden Erfindung;
- Fig. 2: einen herkömmlichen Schwingungsisolator.

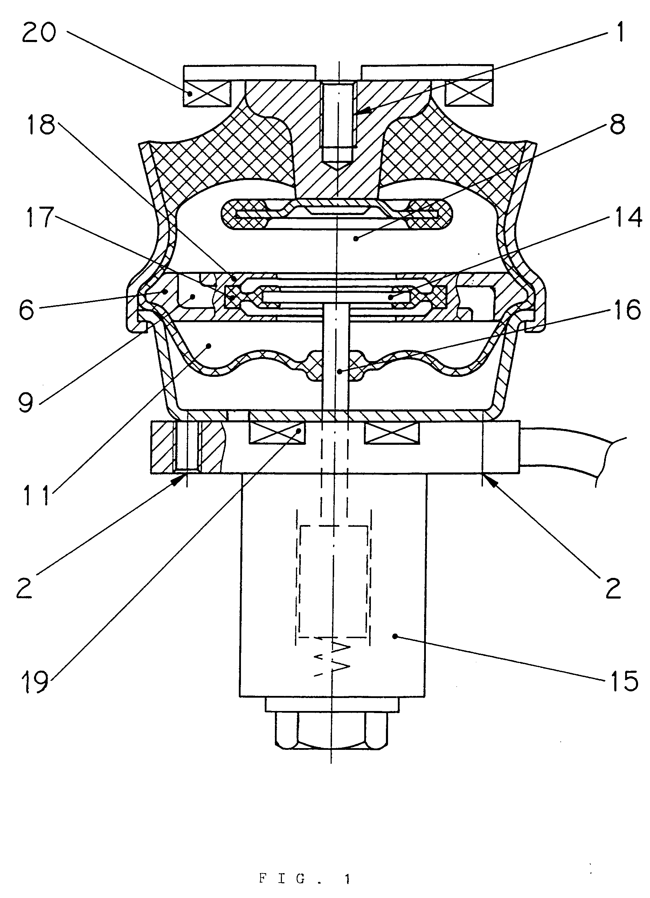

Der Schwingungsisolator nach der vorliegenden Erfindung weist einen im wesentlichen ähnlichen Aufbau auf wie der herkömmliche Schwingungsisolator. Die bereits beschriebenen Teile des in der Fig. 2 gezeigten, herkömmlichen Schwingungsisolators sind in Fig. 1 entweder mit den gleichen Bezugszeichen versehen oder weisen keine Bezugszeichen auf. Eine Beschreibung dieser Teile kann daher entfallen.

Der Schwingungsisolator nach der vorliegenden Erfindung unterscheidet sich vom herkömmlichen Motorlager durch die folgende zusätzlich vorgesehene Konstruktion:

In die feste Zwischenwand 6 ist ein bewegbarer Kolben 14 eingebaut. Die Zwischenwand 6 weist oberhalb und unterhalb des Kolbens eine Öffnung zur oberen bzw. unteren Kammer 8,11 auf. Der Kolben 14 ist derart in der Zwischenwand 6 eingebaut, daß eine Aufwärtsbewegung des Kolbens das Volumen der oberen Kammer 8 verkleinert und gleichzeitig das Volumen der unteren Kammer 11 vergrößert. Umgekehrt bewirkt eine Abwärtsbewegung des Kolbens 14 eine Vergrößerung des Volumens der oberen Kammer 8 und eine Verkleinerung des unteren Kammervolumens 11. Zusätzlich weist die Zwischenwand 6 Anschläge 18 aus einem elastischen Material, wie z.B. Gummi, für den Kolben 14 auf. Dadurch wird die Hubbewegung des Kolbens 14 nach oben und unten mechanisch begrenzt. Zur Bewegung des Kolbens 14 ist ein Antrieb 15 vorgesehen. Der Antrieb besteht aus einem elektromagnetischen Linearmotor 15, der über eine starre Stange 16 den damit verbundenen Kolben 14 bewegt. Die Stange 16 ist durch das untere Gehäuseteil 3, die flexible Zwischenwand 7 und die feste Zwischenwand 6 hindurchgeführt. Zur Erfassung der Schwingungen sind an mehreren Stellen an dem Schwingungen erzeugenden Teil und am Rahmenteil mehrere Sensoren 19,20 angebracht. Diese Sensoren sind Beschleunigungsmeßelemente zur quantitativen Erfassung der zu dämpfenden Schwingungen. Abschließend soll die Funktionsweise des Schwingungsisolators erläutert werden.

Das Aufnahmeteil 1 erzeugt bei einer Bewegung über die statische Gleichgewichtslage hinaus eine dynamische Federkraft durch die Elastizität des Gummikörpers 5 und eine dynamische Dämpferkraft. Die Dämpferkraft entsteht durch die Strömung der Flüssigkeit durch den Verbindungskanal zwischen den beiden Kammern 8 und 11. Die aus der Federkraft und der Dämpferkraft resultierende Kraft wird auf das Aufnahmeteil 2 übertragen. Zur Kompensation dieser dynamischen Kraft wird der Kolben so bewegt, daß die durch ihn erzeugte und vom Motor 15 auf dem Aufnahmeteil 2 abgestützte Kraft dieser resultierenden Kraft genau um 180^{o} phasenverschoben entgegenwirkt. Im Idealfall ist die dann vom Sensor 19 am Rahmenteil gemessene Beschleunigung O.

Bei einer Abwärtsbewegung des Aufnahmeteils 1 wird der Kolben 14 ebenfalls abwärts bewegt. Dabei vergrößert der Kolben das Volumen der oberen Kammer 8 und verkleinert das Volumen der unteren Kammer 11. Durch die neuen Volumenverhältnisse wird die Steifigkeit des Schwingungsisolators vermindert und die Abwärtsbewegung des Aufnahmeteils 1 nicht auf das Aufnahmeteil 2 übertragen. Im Idealfall ist die vom Sensor 19 am Rahmenteil gemessene Beschleunigung 0.

In analoger Weise kompensiert eine Bewegung des Kolbens 14 nach oben eine Aufwärtsbewegung des Aufnahmeteils 1. Die daraus resultierende aktive Veränderung der Volumen in den beiden Kammern 8, 11 führt zu einer veränderlichen Steifigkeit des Schwingungsisolators.

## Patentansprüche

1. Schwingungsisolator zur Unterdrückung der Übertragung von mechanischen Schwingungen von einem Schwingungen erzeugenden Teil auf ein Rahmenteil mit
einem oberen Gehäuseteil (4) und einem damit verbundenen elastischen Körper (5) zur Aufnahme eines Aufnahmeteils (1), an dem das Schwingungen erzeugende Teil befestigbar ist,
einem unteren Gehäuseteil (3) und einem damit verbundenen Aufnahmeteil (2), an dem das Rahmenteil befestigbar ist,
einer festen Zwischenwand (6), die zwischen dem oberen und unteren Gehäuseteil (4,3) ausgebildet ist, wodurch eine obere Kammer (8) und eine untere Kammer (11) begrenzt ist, und einen Verbindungskanal (9) zwischen der oberen und unteren Kammer aufweist, und
einer flexiblen Zwischenwand (7), die die untere Kammer (11) und eine weitere Kammer (12) zwischen sich und dem unteren Gehäuseteil (3) begrenzt, wobei die untere und die obere Kammer (11,8) mit einer Flüssigkeit (10) gefüllt sind, **dadurch gekennzeichnet**,
daß ein von einem Antrieb (15) angetriebener Kolben (14) derart in der Zwischenwand (6) zwischen den beiden Kammern (8,11) angeordnet ist, daß bei seiner Aufwärtsbewegung das Volumen der oberen Kammer (8) verringert und das Volumen der unteren Kammer (11) vergrößert wird, und daß bei seiner Abwärtsbewegung das Volumen der oberen Kammer (8) vergrößert und das Volumen der unteren Kammer (11) verringert wird,
und daß wenigstens ein Sensorelement (19) die mechanischen Schwingungen erfaßt und ein entsprechendes elektrisches Signal erzeugt, wobei die Steuerung des Antriebs (15) in Abhängigkeit von diesem Signal ausgeführt wird.

2. Schwingungsisolator nach Anspruch 1, **dadurch gekennzeichnet**, daß der Antrieb (15) einen kurzhubigen Linearmotor enthält, der fähig ist, hochfrequente Auf- und Abwärtsbewegungen auszuführen.

3. Schwingungsisolator nach Anspruch 1 oder 2, **dadurch gekennzeichnet**, daß der Antrieb (15) zur direkten Übertragung der Bewegungen auf den Kolben (14) mit einer starren Stange (16) verbunden ist, die durch das untere Gehäuseteil (3), die flexible Zwischenwand (7) und die feste Zwischenwand (6) hindurchgeführt ist.

4. Schwingungsisolator nach einem der Ansprüche 1 bis 3, **dadurch gekennzeichnet**, daß der Kolben (14) über eine flexible Membran (17) mit der festen Zwischenwand (6) verbunden ist.

5. Schwingungsisolator nach einem der Ansprüche 1 bis 4, **dadurch gekennzeichnet**, daß in der Zwischenwand Anschläge (18) aus einem elastischen Material für den Kolben (14) ausgebildet sind, die die Auf- und Abwärtsbewegung des Kolbens mechanisch begrenzen.

6. Schwingungsisolator nach einem der Ansprüche 1 bis 5, **dadurch gekennzeichnet**,
daß ein Sensorelement (19) an der Stelle, an der der Schwingungseinfluß minimiert werden soll vorgesehen ist und wenigstens ein weiteres Sensorelement 20 an dem Schwingungen erzeugenden Teil vorgesehen ist.

7. Schwingungsisolator nach einem der Ansprüche 1 bis 6, **dadurch gekennzeichnet**, daß das Sensorelement (19,20) ein Beschleunigungsmeßelement enthält.

8. Schwingungsisolator nach wenigstens einem der Ansprüche 1 bis 7, **dadurch gekennzeichnet**, daß eine Signalverarbeitungseinheit das elektrische Signal des Sensorelements (19,20) in ein Steuersignal umwandelt und dem Antrieb (15) zuführt.

9. Schwingungsisolator nach wenigstens einem der Ansprüche 1 bis 8, **dadurch gekennzeichnet**, daß die weitere Kammer (12) mit dem den Schwingungsisolator umgebenden atmosphärischen Luftdruck verbunden ist.
